# DEMANDE DE BREVET EUROPEEN

(11) **EP 3 950 570 A1**
(43) Date de publication de la demande: **09.02.2022**
(21) Numéro de dépôt: 20189684.2
(22) Date de dépôt: 05.08.2020
(51) Int. Cl.: B67D 1/00, B67D 1/08

(54) **MACHINE DOMESTIQUE DE DISTRIBUTION DE BOISSONS FILTRÉES, CHAUDES, FRAÎCHES ET GAZÉIFIÉES AVEC SYSTÈME DE CAPSULE DE BOISSON**

(71) Demandeur: Eppox, 01630 Saint Jean De Gonville (FR)
(72) Inventeur: De Freitas, Dominique, 01630 Saint Jean de Gonville (FR)
(74) Mandataire: Tzeuton Tchangoum, Eric Olivier

(57) **Abrégé**

L'invention concerne une machine domestique de distribution de boisson (1), comprenant un réservoir d'eau (2) amovible, un système de filtration d'eau (8), au moins une pompe de circulation (9, 9a-9e) pour faire déplacer l'eau jusqu'à un point de distribution (10, 10a-10d) associé à une capsule de boisson (11), la machine comprenant une section de chauffage (12) comportant un dispositif de chauffage (13) configuré pour chauffer l'eau à distribuer, une section de refroidissement (14) comportant un dispositif de refroidissement (15) configuré pour refroidir l'eau à distribuer, et une section de gazéification (16) comportant un dispositif de gazéification (17) configuré pour solubiliser du CO₂ dans l'eau à distribuer, la machine comprenant un panneau de commande (25, 26) pour sélectionner une boisson chaude, une boisson fraiche ou une boisson gazeuse, par activation d'au moins une desdites sections (12, 14, 16).

## Description

L'invention se rapporte au domaine des machines domestiques de distribution de boisson, en particulier du type petit électroménager.

Dans ce domaine, il est connu de proposer des machines à café de divers types. Certaines machines à café nécessitent une préparation et optionnellement une mouture du café avant que la machine puisse préparer la boisson correspondante et la distribuer dans une tasse. D'autres machines utilisent une capsule de café qui est percée par la machine et dont le contenu est utilisé par la machine pour préparer du café sans besoin de préparation.

D'autres machines permettent de réaliser des jus. Ces machines nécessitent de découper des fruits et de les mélanger dans un extracteur.

D'autres machines permettent de réaliser des boissons gazeuses dans lesquelles du CO₂ est dissout dans la boisson. Ces machines intègrent une cartouche de CO₂ sous pression et un assemblage comprenant une paille à plonger dans la boisson à gazéifier.

Malheureusement, dans un désir d'obtenir plusieurs types de boissons, il est nécessaire d'avoir plusieurs différentes machines ce qui peut être encombrant pour une utilisation domestique.

Ainsi, un premier objectif de la présente invention est de proposer une machine de distribution de boisson compacte permettant de distribuer différents types de boissons.

Un deuxième objectif est de proposer une machine dans laquelle la préparation par l'utilisateur préalablement à l'utilisation de la machine est réduite au minimum.

Pour atteindre ces objectifs, l'invention propose une machine domestique de distribution de boisson, comprenant un réservoir d'eau amovible, un système de filtration d'eau, au moins une pompe de circulation pour faire déplacer l'eau jusqu'à un point de distribution associé à une capsule de boisson, la machine comprenant une section de chauffage comportant un dispositif de chauffage configuré pour chauffer l'eau à distribuer, une section de refroidissement comportant un dispositif de refroidissement configuré pour refroidir l'eau à distribuer, et une section de gazéification comportant un dispositif de gazéification configuré pour solubiliser du CO₂ dans l'eau à distribuer, la machine comprenant un panneau de commande pour sélectionner une boisson chaude, une boisson fraiche ou une boisson gazeuse, par activation d'au moins une desdites sections.

Avantageusement, la machine est une machine domestique permettant une distribution de boisson chaude, de boisson fraiche, de boisson gazéifiée, dans plusieurs saveurs par le biais de capsules de divers types et saveurs (café, thé jus, eau gazeuse, soda...).

Selon un aspect, la section de refroidissement est combinée à la section de gazéification, de sorte à pouvoir distribuer une boisson gazeuse fraiche.

Avantageusement, cet agencement permet de réaliser une boisson fraîche gazéifiée. En outre, la basse température de la boisson permet de retenir davantage de CO₂ dissout ce qui fait que la boisson obtenue est davantage gazéifiée.

Selon d'autres aspects pris isolément, ou combinés selon toutes les combinaisons techniquement réalisables :
- la machine comprend une cuve interne formant enceinte réfrigérée et/ou coopérant avec au moins un serpentin du dispositif de refroidissement ; et coopérant en outre avec des moyens de distribution d'eau froide et d'eau froide gazéifiée ; et/ou
- la machine comprend une cartouche de CO₂ amovible connectée au dispositif de gazéification ; et/ou
- le système de filtration comprend une cartouche filtrante amovible ; et/ou
- le réservoir d'eau est sous forme de carafe, de préférence ayant un corps sensiblement prismatique, comportant une valve à une face inférieure coopérant avec un tuyau de prélèvement ; et/ou
- la carafe comporte une poignée massive disposée à une face antérieure de la machine comportant un support de distribution ; et/ou
- la carafe comporte un clapet coulissant supérieur ; et/ou
- la machine comporte un bloc de corps et deux blocs latéraux l'un devant l'autre, le bloc antérieur étant formé par la carafe, et le bloc postérieur formant un compartiment dont la face antérieure est formée par la carafe.
- le bloc postérieur forme un logement de cartouche de gaz ; et/ou
- le bloc de corps comprend un sous-bloc latéral fermé par un volet latéral ; et/ou
- le bloc de corps comprend un sous-bloc latéral fermé par la carafe ; et/ou
- le sous-bloc latéral forme un logement de cartouche filtrante.

Un autre aspect de l'invention concerne une utilisation d'un moyen de gazéification de boisson, d'un moyen de production de jus et d'un moyen de production de boisson chaude, dans un assemblage compact dans une machine selon l'invention; et/ou une méthode d'assemblage d'une machine alliant un moyen de gazéification de boisson, un moyen de production de jus et un moyen de production de boisson chaude de manière compacte dans une machine domestique selon l'invention.

L'invention sera davantage détaillée par la description de modes de réalisation non-limitatifs, et sur la base des figures annexées illustrant des variantes non limitatives de l'invention, parmi lesquelles :

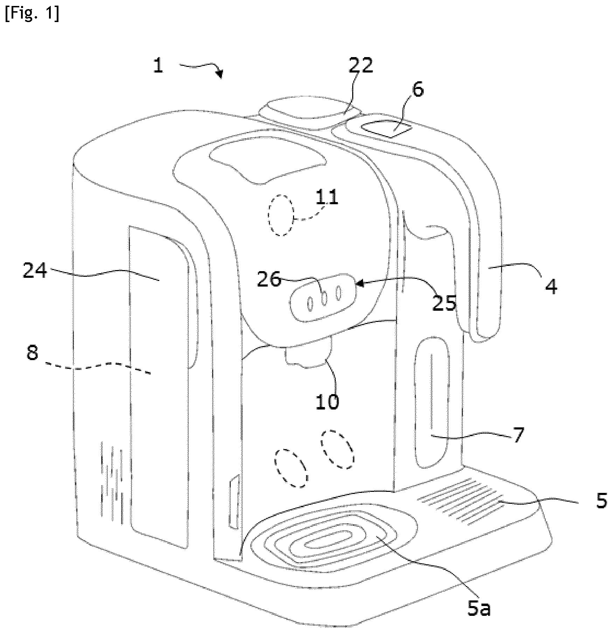

La [Fig.1] illustre schématiquement une vue dans l'espace d'une machine de distribution selon un mode de réalisation préféré ;

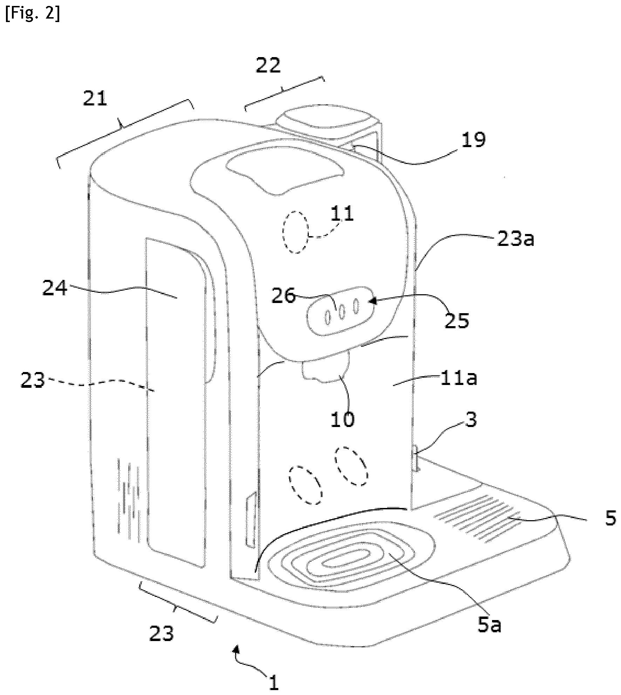

La [Fig.2] illustre schématiquement une vue dans l'espace similaire à la figure précédente, mais où la carafe est retirée.

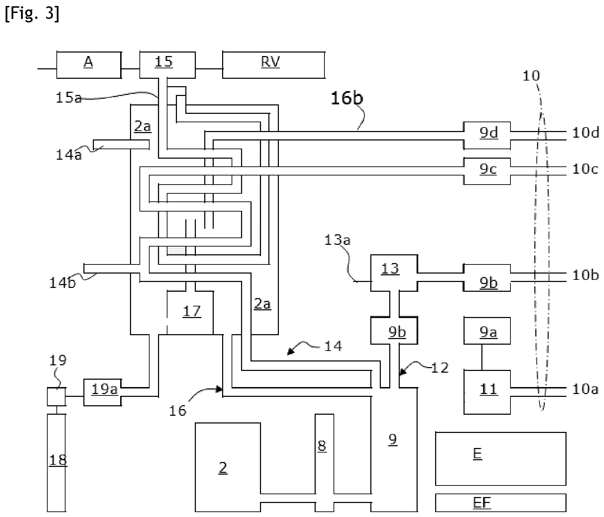

La [Fig.3] illustre schématiquement le circuit de distribution de la machine de distribution selon un premier mode de réalisation préféré ;
La [Fig.4] illustre schématiquement le circuit de distribution de la machine de distribution selon un deuxième mode de réalisation préféré ;
La [Fig.5] illustre schématiquement une vue dans l'espace d'une capsule de boisson.

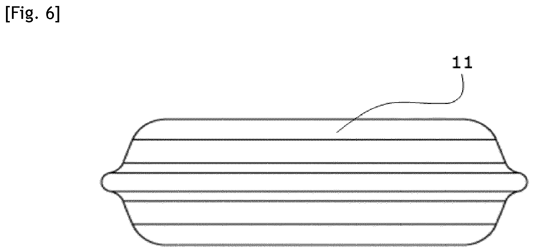

La [Fig.6] illustre schématiquement une vue de côté de la capsule de boisson de la figure précédente.

L'invention concerne une machine domestique de distribution de boisson 1. Il s'agit d'une machine du type petit électroménager.

La machine comprend un réservoir d'eau 2 amovible. En particulier, le réservoir d'eau 2 est sous forme de carafe, de préférence ayant un corps sensiblement prismatique. La carafe comporte une valve (non-représentée) de préférence à une face inférieure coopérant avec un tuyau de prélèvement 3. La machine 1 mesure par exemple H300xL280xP300mm.

Un réservoir 2 est préférable à une arrivée d'eau de réseau car il n'y a pas d'installation complexe de plomberie pour faire fonctionner la machine 1.

Le tuyau de prélèvement 3 est connecté à une pompe spécifique pouvant être celle décrite plus bas. Avantageusement, un tube 3 inférieur permet de mettre à profit la gravité pour le prélèvement de l'eau, et permet de prélever quasiment toute l'eau de la carafe (2). Le réservoir 2 a par exemple une contenance de 2,5 L et mesure par exemple H285xL70xP145mm.

De préférence, la carafe (2) comporte une poignée massive 4 disposée à une face antérieure de la machine 1. La face antérieure comporte un support de boisson 5, latéral par rapport à un support de distribution 5a au niveau d'un point de distribution. Le support de distribution 5a mesure par exemple H150xL140xP100mm.

Avantageusement, cela permet de réaliser un agencement compact en mettant à profit l'espace au dessus d'un support de boisson 5 antérieur pour réaliser une poignée massive 4 pour une bonne prise de la carafe (2). En outre, cela permet de réaliser une forme esthétique de grande taille.

Dans la variante illustrée, la carafe (2) comporte un clapet 6 coulissant supérieur. Le clapet 6 permet de réaliser le remplissage de la carafe. Il est par exemple coulissé vers l'arrière pour ouvrir la carafe et refermé en utilisation sur la machine 1.

Le réservoir 2 peut comporter une fenêtre de niveau 7 pour en vérifier le niveau de remplissage.

La machine 1 comprend en outre un système de filtration 8 de l'eau. De préférence, le système de filtration 8 comprend une cartouche filtrante amovible, par exemple un filtre à charbon de H250xL60xP60mm.

Le système de filtration 8 est disposé en aval du réservoir d'eau 2. Il permet de filtrer des éléments de l'eau de la carafe tels que des micro-débris ou poussières.

La machine 1 comprend en outre au moins une pompe de circulation 9 pour faire déplacer l'eau jusqu'à un point de distribution 10. Le point de distribution est associé à une capsule de boisson 11 pouvant servir à la distribution de boisson. Un logement de capsule est prévu à cet effet. La pompe 9 est disposée en aval du système de filtration 8. De préférence, la machine comprend un moyen de détection de capsule tel qu'un détecteur optique ou une autre technologie adaptée.

La machine 1 comporte donc un circuit de distribution partant du réservoir 2 au système de filtration 8 puis à la pompe 9. Après certains éléments du circuit de distribution détaillés plus bas, l'eau arrive à un point de distribution 10 pour pouvoir être distribuée en boisson.

L'invention propose une machine 1 pouvant fonctionner avec des capsules 11. Ainsi, des capsules 11 peuvent être disposées sur le circuit de distribution, via une dérivation spécifique ou de préférence via un circuit de distribution spécifique afin que le contenu de la capsule 11 et l'eau permettent de distribuer la boisson obtenue. Il s'agit en particulier d'une capsule 11 de boisson concentrée.

Dans une variante, dans le cas d'une boisson préparée avec une capsule 11, le contenu de la capsule 11 est véhiculé dans un récipient de distribution, puis de l'eau du circuit solubilise ledit contenu de capsule 11 dans ledit récipient de boisson.

En particulier, une pompe de capsule 9a est prévue à cet effet, telle qu'une pompe à vide. Dans la variante préférée, le circuit de distribution débouche sur au moins une sortie de distribution d'eau détaillée plus bas, et un circuit indépendant entre la capsule 11 et la pompe 9a qui débouche sur une sortie indépendante 10a, dite sortie de distribution de capsule 10a.

La machine 1 comporte de préférence un tiroir de rangement 11a pour des capsules 11 usagées. En particulier, le tiroir 11a est disposé en arrière du point de distribution 10, au dessus et en arrière du support de distribution 5a. Avantageusement, cela permet de prévoir un espace de rangement volumineux.

Concernant maintenant le circuit de distribution de la machine 1, il comprend une section de chauffage 12 comportant un dispositif de chauffage 13 configuré pour chauffer l'eau distribuée. Le dispositif de chauffage 13 peut être autour de la canalisation correspondante ou des résistances peuvent être dans le flux d'eau. Un équipement de l'art antérieur peut être utilisé comme dispositif de chauffage.

Dans la variante préférée, une sonde de température 13a est prévue pour un meilleur contrôle du dispositif de chauffage 13 afin d'atteindre une température cible donnée.

L'eau qui passe dans cette section est chauffée et est ensuite distribuée en boisson, en particulier via une sortie de distribution d'eau chaude 10b. Il peut s'agir d'une distribution d'eau chaude dans le récipient par exemple à utiliser avec un sachet de thé.

De préférence, au moins une pompe d'eau chaude 9b est prévue au niveau de la sortie de distribution d'eau chaude 10b en amont du dispositif de chauffage 13 et/ou en aval du dispositif de chauffage 13 pour faciliter le tirage d'eau chaude. Dans le cas d'une utilisation de capsule 11, le contenu de la capsule 11 est versé dans le récipient pour être mélangé à l'eau chaude. Il peut s'agir de thé ou de café concentré. Des capsules 11 correspondantes peuvent donc être fournies à l'utilisateur de la machine 1.

Le circuit de distribution comprend en outre une section de refroidissement 14 comportant un dispositif de refroidissement 15 configuré pour refroidir l'eau distribuée. En particulier, une canalisation correspondante (14) peut passer dans une enceinte réfrigérée et/ou coopérer avec au moins un serpentin 15a associé au dispositif de refroidissement 15. Un équipement de l'art antérieur peut être utilisé comme dispositif de refroidissement.

En particulier, la machine comprend une cuve d'eau 2a, par exemple en acier inoxydable forme une enceinte réfrigérée, ici parcourue par un serpentin 15a du dispositif de refroidissement 15, et une canalisation d'eau passe dans ou autour de la cuve 2a et/ou à proximité dudit serpentin 15a.

Dans la variante préférée, une sonde de température 14a est prévue dans la canalisation (14) pour un meilleur contrôle du refroidissement afin d'atteindre une température cible donnée.

L'eau issue de la canalisation (14) ressort au point de distribution 10 par une sortie de distribution d'eau froide 10c (ou sortie d'eau froide 10c). De préférence, au moins une pompe d'eau froide 9c est prévue au niveau de la sortie d'eau froide 10c pour faciliter le tirage d'eau froide. De même, l'eau qui passe dans cette section est rafraîchie et est ensuite distribuée en boisson. Il peut s'agir d'une distribution d'eau fraiche ou, dans le cas d'une utilisation de capsule, un jus de fruit en concentré. Des capsules 11 correspondantes peuvent donc être fournies à l'utilisateur de la machine 1.

Le circuit de distribution comprend en outre une section de gazéification 16 comportant un dispositif de gazéification 17 configuré pour solubiliser du CO₂ dans l'eau à distribuer. Il s'agit en particulier d'une installation permettant d'introduire du CO₂ dans l'eau à distribuer afin de l'y dissoudre. Ce mécanisme est connu en lui-même et ne sera pas davantage discuté.

Selon une variante, la machine comprend une cartouche de CO₂ 18 amovible connectée au dispositif de gazéification 17. En particulier, il s'agit d'une cartouche CO₂ 18 dimensionnée et correspondant à une pièce de montage 19 de la machine. Par exemple, la cartouche de CO₂ mesure H180xL50xP50mm. Des cartouches de CO₂ correspondantes peuvent donc être fournies à l'utilisateur de la machine 1.

En particulier, la machine comprend une ou ladite cuve 2a fermée, de préférence sous pression, associée à un agitateur de CO₂ (17) plongeant dans la cuve 2a. Un module de mise sous pression 19a est prévu pour mettre la cuve sous pression et faciliter la solubilisation du CO₂ dans l'eau à distribuer.

L'eau issue de la section de gazéification 16 ressort via une canalisation spécifique 16b au point de distribution 10 par une sortie de distribution d'eau froide gazéifiée 10d (ou sortie d'eau gazéifiée 10d). De préférence, au moins une pompe d'eau gazéifiée 9d est prévue au niveau de la sortie d'eau gazéifiée 10d pour faciliter le tirage d'eau gazéifiée.

Selon un aspect, la section de refroidissement 14 est combinée à la section de gazéification 16, de sorte à pouvoir distribuer une boisson gazeuse fraiche. En particulier, une même cuve 2a est prévue pour les sections de refroidissement 14 et de gazéification 16, et permet de réfrigérer de l'eau et la gazéifier, de préférence sous pression.

Avantageusement, cet agencement permet de réaliser une boisson fraîche gazéifiée. En outre, la basse température de la boisson permet de retenir davantage de CO₂ dissout ce qui fait que la boisson obtenue est davantage gazéifiée qu'une boisson à température ambiante.

La cuve 2a est parcourue par ledit serpentin 15a de sorte que l'eau de la cuve 2a est refroidie de manière significative par la grande surface de contact entre ledit serpentin 15a et la cuve 2a. En outre, la mise sous pression améliore davantage la gazéification.

Dans la variante préférée, une sonde de température 14b est prévue dans la cuve 2a pour un meilleur contrôle du refroidissement afin d'atteindre une température cible donnée.

La référence A concerne une carte d'alimentation et la référence RV concerne un radiateur et un ventilateur du dispositif de refroidissement 15.

La référence E concerne une carte électronique et la référence EF concerne une carte électronique de façade.

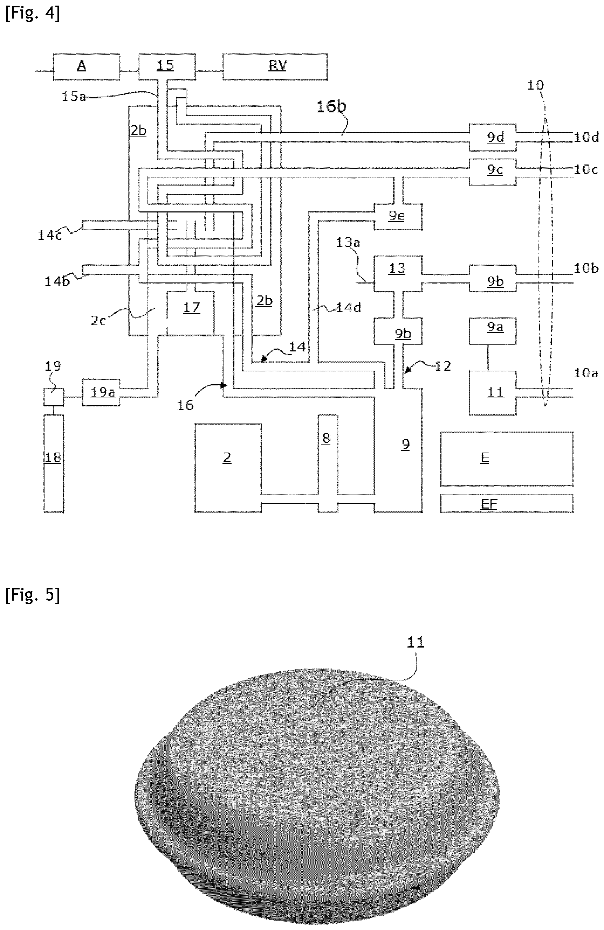

Dans une autre variante de machine pouvant être illustrée par la figure 4, en lieu et place de la cuve en acier 2a est prévu une cuve formant banc de glace 2b. A l'intérieur de cette cuve 2b, se trouve un compartiment supplémentaire 2c pour la section de gazéification. Il s'agit d'un deuxième réservoir notamment pour la préparation de l'eau froide gazéifiée.

Le banc à glace évite la stagnation de l'eau et permet une distribution en continu d'une importante quantité d'eau froide. Le système de refroidissement à « banc de glace » comprend par exemple deux serpentins, un en acier inoxydable ou en cuivre et l'autre en cuivre, plongés dans une cuve remplie d'eau. Le serpentin en cuivre contenant le gaz réfrigérant glace l'eau de la cuve produisant une réserve de froid qui refroidit, à son tour, l'eau potable qui circule à l'intérieur de l'autre serpentin, en acier inoxydable ou en cuivre. L'appareil est ainsi non seulement plus performant, mais en outre l'hygiène et la qualité de l'eau sont assurées car cette dernière circule sans relâche à l'intérieur des réservoirs sans jamais s'arrêter.

En outre, une sonde de température 14c froide est prévue dans le compartiment 2c, ici en lieu et place de a sonde 14a.

Par ailleurs, on peut prévoir dans cette variante une dérivation 14d issue de la pompe principale 9. Cette dérivation 14d peut être associée à une autre mini-pompe 9e avec une sortie de distribution spécifique ou de préférence une sortie de distribution connectée à une autre sortie (10c). Cette dérivation permet de faire circuler l'eau en continu dans la section de refroidissement 14.

Concernant maintenant la constitution générale de la machine 1, elle comporte un bloc de corps 21 de machine et deux blocs latéraux l'un devant l'autre. Parmi les blocs latéraux, le bloc antérieur étant formé par la carafe (2), et le bloc postérieur 22 forme un compartiment dont la face antérieure est formée par la carafe (2). Le bloc postérieur 22 n'a pas de fermeture avant, et est conformé pour être fermé par la carafe (2). Cela permet de faciliter le remplissage de la carafe et le changement de consommable dans le bloc postérieur 22.

Dans la variante illustrée, le bloc postérieur forme un logement de cartouche de gaz 18. Ainsi, la pièce de montage 19 de la cartouche de CO₂ 18 est prévue dans le bloc postérieur 22 pour connecter la cartouche de CO₂ au dispositif de gazéification 17.

Selon une variante, le bloc de corps 21 comprend un sous-bloc latéral ou bloc latéral 23 fermé par un volet latéral 24 et/ou un deuxième sous-bloc latéral 23a opposé masqué par la carafe (2). En particulier, le bloc latéral 23a forme un logement de cartouche filtrante (8). Ainsi, un dispositif de montage correspondant (non représenté) est prévu dans le bloc latéral 23a.

Concernant maintenant le système de commande de la machine 1, il est basé sur un panneau de commande 25 associé à une électronique de commande. Le système de commande est configuré pour piloter les pompes 9, 9a-9d et des électrovannes (non-représentées) de sélection du circuit requis pour la distribution de boisson. On peut envisager des capteurs pour optimiser la commande, par exemple pour alerter sur la quantité d'eau insuffisante ou l'absence de capsule 11 dans le logement de capsule le cas échéant.

Le panneau de commande 25 est configuré pour sélectionner une boisson chaude, une boisson fraiche ou une boisson gazeuse, par activation d'au moins une desdites sections. A cet effet des boutons de commandes 26 sont prévus pour sélectionner la boisson désirée, et, si nécessaire après l'insertion de la capsule 11 requise, l'électronique de commande commence la préparation et la distribution de la boisson. Il s'agit par exemple de la gauche vers la droite d'un bouton eau froide, un bouton eau gazéifiée et fraiche, un bouton eau chaude avec des icones correspondants.

## Revendications

1. Machine domestique de distribution de boisson (1), comprenant un réservoir d'eau (2) amovible, un système de filtration d'eau (8), au moins une pompe de circulation (9, 9a-9e) pour faire déplacer l'eau jusqu'à un point de distribution (10, 10a-10d) associé à une capsule de boisson (11), la machine comprenant une section de chauffage (12) comportant un dispositif de chauffage (13) configuré pour chauffer l'eau à distribuer, une section de refroidissement (14) comportant un dispositif de refroidissement (15) configuré pour refroidir l'eau à distribuer, et une section de gazéification (16) comportant un dispositif de gazéification (17) configuré pour solubiliser du CO₂ dans l'eau à distribuer, la machine comprenant un panneau de commande (25, 26) pour sélectionner une boisson chaude, une boisson fraiche ou une boisson gazeuse, par activation d'au moins une desdites sections (12, 14, 16).

2. Machine selon la revendication précédente, **caractérisée en ce que** la section de refroidissement (14) est combinée à la section de gazéification (16), de sorte à pouvoir distribuer une boisson gazeuse fraiche.

3. Machine selon l'une des revendications précédentes, **caractérisée en ce qu'**elle comprend une cuve (2a) interne formant enceinte réfrigérée et/ou coopérant avec au moins un serpentin du dispositif de refroidissement (15) ; et coopérant en outre avec des moyens de distribution d'eau froide (10c) et d'eau froide gazéifiée (10d).

4. Machine selon l'une des revendications précédentes, **caractérisée en ce qu'**elle comprend une cartouche de CO₂ (18) amovible connectée au dispositif de gazéification (17).

5. Machine selon l'une des revendications précédentes, **caractérisée en ce que** le système de filtration (8) comprend une cartouche filtrante amovible.

6. Machine selon l'une des revendications précédentes, **caractérisée en ce que** le réservoir d'eau (2) est sous forme de carafe, de préférence ayant un corps sensiblement prismatique, comportant une valve à une face inférieure coopérant avec un tuyau de prélèvement (3).

7. Machine selon la revendication précédente, **caractérisée en ce que** la carafe (2) comporte une poignée massive (4) disposée à une face antérieure de la machine (1) comportant un support de distribution (5).

8. Machine selon la revendication 6 ou 7, **caractérisée en ce qu'**elle comporte un bloc de corps (21) et deux blocs latéraux l'un devant l'autre, le bloc antérieur étant formé par la carafe (2), et le bloc postérieur (22) formant un compartiment dont la face antérieure est formée par la carafe (2).

9. Machine selon la revendication précédente combinée à la revendication 4, dans laquelle le bloc postérieur (22) forme un logement de cartouche de gaz (18).

10. Machine selon la revendication 8 ou 9, **caractérisée en ce que** le bloc de corps (21) comprend un sous-bloc latéral (23a) fermé par la carafe (2), formant de préférence un logement de cartouche filtrante (8).

11. Utilisation d'un moyen de gazéification de boisson, d'un moyen de production de jus et d'un moyen de production de boisson chaude, dans un assemblage compact dans une machine domestique selon l'une des revendications précédentes.
